# EUROPEAN PATENT APPLICATION

(11) **EP 3 572 230 A1**
(43) Date of publication of application: **27.11.2019**
(21) Application number: 18741196.2
(22) Date of filing: 16.01.2018
(51) Int. Cl.: B32B 27/18, B32B 1/02, B32B 27/20, B32B 27/32, B65D 65/42, C08K 3/36, C08L 23/02, C10M 101/02, C10M 101/04, C10M 103/06, C10M 105/38, C10M 143/00, C10N 30/06, C10N 40/00, C10N 40/02

(54) **STRUCTURE HAVING OIL FILM ON SURFACE THEREOF**

(30) Priority: 18.01.2017 JP 2017006846
(71) Applicant: Toyo Seikan Co., Ltd., Tokyo 141-8640 (JP)
(72) Inventor: AKUTSU, Yosuke, Yokohama-shi Kanagawa 230-0001 (JP); KOMATSU, Ikuo, Yokohama-shi Kanagawa 230-0001 (JP); FUJITA, Eriko, Yokohama-shi Kanagawa 230-0001 (JP); NYUU, Keisuke, Yokohama-shi Kanagawa 230-0001 (JP)
(74) Representative: J A Kemp LLP
(86) International application number: PCT/JP2018/000977
(87) International publication number: WO 2018/135476

(57) **Abstract**

The present invention provides a structured body including: a substrate having a surface formed of an olefin resin containing lubricant and silica; and an oil film formed on the surface, wherein the olefin resin containing lubricant and silica includes silica particles dispersed as an additive for preventing the lubricant from bleeding.

## Description

### Technical Field:

The present invention relates to a structured body having an oil film formed on the surface. More specifically, the present invention relates to a structured body having a surface with improved lubricity to a hydrous substance, and the lubricity is imparted by the oil film.

### Background Art:

Since plastics can be shaped easily in a simple manner for various embodiments, they are used widely in various fields. In particular, olefin resins such as low-density polyethylene are used to form an inner wall surface of a container like a directly-blow shaped bottle. Because of its squeezing property and squeezing-out property, such a directly-blow shaped bottle is used widely for containers to contain particularly viscous fluid substances like ketchup and mayonnaise.

Meanwhile, in a container to contain a viscous fluid substance, in order to discharge the content rapidly and completely to use up the content without residing within the container, the container is required to have an inner surface that exhibits a high lubricity to the content.

Conventionally, the lubricity is imparted by blending an additive such as a lubricant in the resin to form the container inner surface. In various techniques proposed recently, a liquid film is formed on the substrate surface of resin so as to improve the surface properties such as lubricity to a viscous substance (see Patent document 1 for instance).

The techniques are currently attracting attention since they can improve remarkably the lubricity in comparison with a case of blending an additive like a lubricant in a resin to form the substrate surface.

In this technique of improving the surface properties by forming a liquid film on the surface, it is required to retain stably the liquid film on the surface. For this purpose, in the aforementioned Patent document 1, fine ruggedness is formed on the surface.

The fine ruggedness can be formed usually by spraying, before forming a liquid film, a substrate surface with a coating liquid like an ethanol solution in which inorganic fine particles are dispersed, and then, by drying the surface. Alternatively, a resin composition blended with inorganic fine particles is used as the resin for forming the substrate surface. The resin composition is subjected to a shaping process like stretching, thereby producing a substrate having a predetermined shape (e.g., a container) (see Patent document 1 or Patent document 2, for instance). According to the techniques, a predetermined ruggedness may be formed on a substrate surface in accordance with the particle size and blend amount of the inorganic fine particles blended in the resin forming the substrate surface.

However, when the liquid film is formed to improve lubricity to the viscous substance as mentioned above, the liquid film on the surface may sometimes be formed unevenly, to cause a failure that the viscous substance may adhere to a part of the substrate surface. In particular, in a case of forming an oily film (oil film) on the substrate surface to improve the lubricity to the viscous hydrous substance, the problem is more likely to occur.

### Prior Art Documents:

### Patent Documents:

Patent Document 1: JP 5971337
Patent Document 2: JP-A-2015-227012

### Summary of the Invention:

### Problems to be solved by the invention:

Therefore, an object of the present invention is to provide a structured body having a surface on which an oil film is formed stably so that the lubricity to a viscous hydrous substance is exhibited stably across the entire surface.

### Means for solving the problems:

The present inventors conducted a number of experiments for the problems and reviewed the experimental results to find the factor that destabilizes formation of the oil film. Namely, when the substrate surface is formed of an olefin resin and the olefin resin is blended with a lubricant, the lubricant may destabilize the oil film formation, whereby the inventors arrived at the present invention.

That is, the present invention provide a structured body comprising a substrate having a surface formed of an olefin resin containing lubricant and silica, and an oil film formed on the surface, wherein the olefin resin containing lubricant and silica comprises silica particles dispersed as an additive for preventing the lubricant from bleeding.

Preferably, the structured body of the present invention can be further characterized as follows:
(1) the substrate has a multilayer structure, and the multilayer structure comprises an olefin resin layer containing lubricant and silica, a lubricant-containing olefin resin layer and a gas barrier resin layer in this order when viewed from the surface on which the oil film is formed;
(2) a ratio in thickness of the lubricant-containing olefin resin layer has a thickness 2 to 6 times the thickness of the olefin resin layer containing lubricant and silica;
(3) the lubricant is contained in an amount of 0.02 to 5 parts by mass per 100 parts by mass of an olefin resin in the olefin resin layer containing lubricant and silica;
(4) the oil film is formed of any material selected from glycerol fatty acid ester, liquid paraffin, and edible oil/fat;
(5) the substrate is a container to contain a hydrous substance;
(6) including the oil film, the olefin resin layer containing lubricant and silica, the lubricant-containing olefin resin layer, the gas barrier resin layer and an outer surface layer in this order when viewed from the interior of the container, and
   the outer surface layer and the olefin resin layer containing lubricant and silica are formed of an identical olefin resin;
(7) the lubricant comprises unsaturated fatty acid amide;
(8) the silica particles comprise hydrophilic silica particles dispersed in the amount of not more than 5% by mass in the olefin resin layer containing lubricant and silica; and
(9) the silica particles have a mean primary particle size in a range of 1 to 50 µm.

In the present specification, the hydrophilic silica particles are silica particles that are not subjected to surface treatment with a hydrophobizing agent if not described otherwise. Namely, the hydrophilic silica particles have silanol groups on the surfaces.

### Effects of the invention:

Since the structured body of the present invention has an oil film formed on the surface thereof, it has an excellent lubricity to a viscous hydrous substance. A most essential feature in the present invention is that a lubricant and silica particles are blended in the olefin resin that forms the substrate surface.

In the present invention, an oil film is formed on the substrate surface in order to improve the lubricity, and this oil film serves to sufficiently improve the lubricity to a viscous hydrous substance. In other words, the lubricant is blended in the olefin resin that forms the substrate surface, but the object is not to improve the lubricity.

Since the olefin resin has no polar group in its molecules and it has very high affinity to an oily liquid, it has excellent oil film retention. For this reason, the substrate surface is formed of the olefin resin in the present invention. For the olefin resin, any olefin resin commercially available for industrial use can be used. Some of these olefin resins are blended with a lubricant in advance due to the reasons below. In many cases, thermoplastic resins like olefin resins are imparted with a predetermined shape by heat-shaping with a predetermined mold. In the resin, a lubricant is blended in advance to impart the resin with releasability so as to omit the process of blending the lubricant during shaping.

Since the amount of the lubricant to be blended is very small, it does not usually adversely affect the properties and the like of the resin. However, the study by the present inventors has clarified that it would be difficult to form a uniform oil film on a surface of a substrate that has been shaped by using an olefin resin blended with a lubricant. The reason is as follows. That is, when the olefin resin is blended with a lubricant, more lubricant may be bled onto the surface, and further the lubricant has a high repellency to an oily liquid. In other words, in a case of applying an oily liquid onto the surface where the lubricant has been bled in order to form an oil film, the oily liquid may be repelled on the area where the lubricant is bled. As a result, the thickness of the oil film may vary considerably or the oil film may not be formed at some part of the surface. As a result, the viscous hydrous substance may adhere to the parts or the lubricity may deteriorate considerably.

In the present invention, silica particles are further blended in the olefin resin blended with a lubricant, thereby effectively preventing the lubricant from bleeding onto the surface. This may enable to form an oil film of a uniform thickness, and lubricity to a viscous hydrous substance may be exhibited across the entire surface of the substrate. That is, since the silica particles have an extremely high affinity to the lubricant, they can be used as an additive for preventing the lubricant from bleeding, so as to effectively prevent the lubricant from bleeding onto the surface.

Since the structured body of the present invention exhibits a stable lubricity to a hydrous substance, it can be used preferably as a packaging material for a container or lid to contain viscous hydrous substances like ketchup, mayonnaise, and dressing.

### Brief Description of the Drawings:

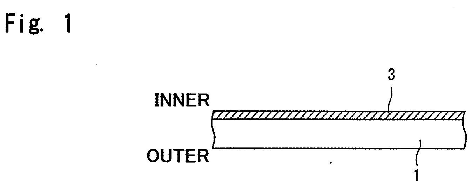

[Fig. 1] : a view showing a surface as a main part of a structured body of the present invention.

### Mode for Carrying Out the Invention:

### <Outline of structured body>

The structured body of the present invention comprises a substrate 1 having at least one surface formed of an olefin resin containing lubricant and silica particles, and an oil film 3 formed on the surface (in particular, inner surface) of the substrate 1.

As the olefin resin used for forming the surface of the substrate 1, any resins known per se can be used. The examples include olefinic polymers such as low-density polyethylene, linear low-density polyethylene, medium- or high-density polyethylene, polypropylene, poly(1-butene) and poly(4-methyl-1-pentene); and copolymerized resins or blends of these olefins. When the structure is used as a squeezing container for squeezing out the content, it is preferable to use ethylene resins represented by low-density polyethylene and linear low-density polyethylene.

The lubricant contained in the aforementioned olefin resin is blended in commercially available olefin resins, and the examples are as follows:
fatty acids such as stearic acid and lauric acid;
aliphatic amides such as stearic acid amide, palmitic acid amide, oleic acid amide, erucic acid amide, methylenebisstearic acid amide, ethylenebisstearic acid amide, ethylenebisbehenic acid amide, ethylenebisoleic acid amide, linoleic acid amide, and linolenic acid amide;
fatty acid esters such as butyl stearate, hydrogenated castor oil, and ethylene glycol monostearate;
alcohols such as cetyl alcohol and stearyl alcohol; and
metallic soaps such as zinc stearate and calcium stearate.

The present invention exhibits its best result particularly when an olefin resin containing an aliphatic amide as a lubricant is contained as the lubricant. Among the aliphatic amides, oleic acid amide that is an unsaturated fatty acid amide has a high repellency to oily liquids. Therefore, formation of the oil film 3 may be the most difficult when the surface of the substrate 1 is formed of the olefin resin blended with aliphatic amide as a lubricant. The present invention enables to form stably a uniform oil film 3 even if such a lubricant is contained.

Some of the aforementioned aliphatic amides have an unsaturated bond, and the examples of the aliphatic amide include oleic acid amide, erucic acid amide, ethylene bisoleic acid amide, linoleic acid amide and linolenic acid amide. These aliphatic amides are highly motile and easy to bleed due to the presence of unsaturated bonds in the molecular skeleton. When the lubricant is used, bleeding of the lubricant onto the substrate surface can be prevented effectively, and an oil film of a uniform thickness can be formed. In this point, the effect of the present invention can be exhibited remarkably.

The aforementioned lubricant is blended to impart properties such as releasability. Therefore, the amount of the lubricant is very small, i.e., in a range of 0.02 to 5 parts by mass per 100 parts by mass of the olefin resin, from the viewpoint of reducing the bleeding, preferably in a range of 0.02 to 0.08 parts by weight.

The silica particles are used as an anti-bleeding additive for preventing the lubricant from bleeding. The blend amount of the silica particles are preferably in a range of 100 to 28,000 parts by mass, more preferably 300 to 20,000 parts by mass, and particularly preferably 1,000 to 18,000 parts by mass per 100 parts by mass of the lubricant contained in the olefin resin. This means that blending an excessive amount of the silica particles do not result in improvement of the effect of preventing the bleeding, but rather, it may deteriorate formability of the olefin resin. In some cases, the silica particles serve not as an anti-bleeding additive but a roughening agent. As a result, the particles may form a large ruggedness on the substrate surface. Needless to note, a small amount of the blended silica particles may result in insufficient effect of preventing the lubricant from bleeding, making it difficult to homogeneously form the oil film 3.

The blend amount of the silica particles is preferably not more than 5.5 parts by mass per 100 parts by mass of the olefin resin. Since the silica particles used in the present invention are not a roughening agent, the blend amount may be decreased considerably in comparison with a case where the particles are used as a roughening agent. For instance, the blend amount of the silica particles may be not more than 1.0 part by mass, particularly in a range of 0.5 to 0.8 parts by mass, or further decreased to approximately a range of 0.5 to 0.6 parts by mass per 100 parts by mass of the olefin resin.

It is also possible to use particles of inorganic oxide, such as alumina and titanium oxide, other than the silica particles. However, particles of these inorganic oxides substantially do not exhibit the function of preventing a lubricant from bleeding, and thus, they cannot achieve the object of the present invention, i.e., formation of a homogeneous oil film 3.

In the present invention, the silica particles preferably has a large specific surface area so that it can use surface adsorption with respect to the lubricant (in particular, fatty acid amide), thereby preventing the lubricant from bleeding onto the substrate surface. From the viewpoint of surface adsorption, smaller mean primary particle size of the added silica particles (mean particle size D50 on the volume basis as measured by the laser diffraction light scattering method) is preferred. When the mean size is less than 50 µm, less than 20 µm, less than 10 µm, and in particular less than 1 µm, the surface area of the silica particles with respect to the addition amount of the silica particles may be increased to provide a preferable function of bleeding prevention.

On the other hand, silica particles less than 1 µm in size may easily cause secondary aggregation in the olefin resin as a substrate, which may hinder uniform dispersion. When the secondary aggregation occurs, the surface area of the silica particles to cause surface adsorption is decreased considerably with respect to the addition amount of the silica particles. In order to avoid this, the mean primary particle size is preferably not less than 1 µm.

From the viewpoint mentioned above, it is preferable that the mean primary particle size is usually within the range of about 1 to about 20 µm for dispersing uniformly the particles in the olefin resin and exhibiting the bleeding prevention effect stably across the entire surface of the substrate. Further, the particle size selected here is within the preferable range and sufficiently smaller than the thickness of layer to which the silica particles are to be added, so that it is possible to avoid formation of unnecessary ruggedness on the substrate surface.

The silica particles may be surface-treated or not. In a case of surface-treating the silica particles, examples of the surface treatment agent include silicon-based hydrophobizing agents such as a silane compound, a siloxane compound and a silazane compound. In the present invention, it is preferable to use hydrophilic silica particles in order to exhibit most effectively the effect of preventing the lubricant in particular, fatty acid amide, from bleeding. Silanol groups are present on the surface of the hydrophilic silica particles that are not surface-treated with the hydrophobizing agent. It is presumed that the fatty acid amide are adsorbed onto the silica surface as a result of the interaction between the silanol group and the amide group of the fatty acid amide, thereby reducing the bleeding.

The blend amount of the hydrophilic silica is as described above. From the viewpoint of the bleeding prevention effect, and the balance in the dispersing property and the shaping property, the silica is preferably dispersed in an amount of not more than 5% by mass in the olefin resin layer containing lubricant and silica.

In the present invention, though there is no particular limitation on the thickness of each layer of the substrate 1, the inner surface layer is preferably has a thickness in a range of 10 to 25 µm at the barrel. The lubricant-containing resin layer preferably has a thickness 2 to 6 times the thickness of the olefin resin layer containing lubricant and silica. Namely, even when the lubricant-containing olefin resin layer is thick, bleeding of the lubricant into the substrate surface can be prevented effectively, and thus, the effect of the present invention is exhibited.

The substrate 1 having a surface formed of the aforementioned olefin resin containing lubricant and silica can be used in various embodiments. For instance, it may be formed as a pipe to convey a viscous hydrous substance or a container to contain a viscous hydrous substance. There is no particular limitation on the embodiment as long as the surface to be brought into contact with the viscous hydrous substance is formed of the aforementioned olefin resin.

Though the substrate 1 may have a single-layer structure of the aforementioned olefin resin, preferably it has typically a laminated structure with the other materials, provided that the surface is formed of the olefin resin. For instance, it is possible to laminate a metal foil, glass, paper or another resin layer beneath the surface resin layer formed of the olefin resin in accordance with the embodiment. In formation of the laminated structure, it is possible to use any suitable adhesive to enhance the adhesion strength with the metal foil or the other resin layer.

For instance, an aluminum foil is used usually for the metal foil. Use of the aluminum foil is particularly suitable for formation of a pouch.

Further, the structure having a lamination of the other resin layer is suitable for embodiments of containers like a bottle or a cup. Representative examples of the other resin layer to be used specifically as the intermediate layer include a layer of a gas barrier resin such as an ethylene-vinyl alcohol copolymer, an oxygen-absorbing layer including an oxidizable polymer and a transition metal catalyst, or a regrind layer including scraps like burrs that is generated at the time of shaping. It is also possible to provide an adhesive resin layer known per se for adhering the respective layers.

In the multilayer structure, it is also possible to make the surface layer of the olefin resin as the inner surface and to use another resin for making the outer surface. For instance, the outer layer can be formed of a polyester resin such as PET.

In the present invention, the substrate 1 preferably has a structure comprising: an inner surface layer of the olefin resin containing lubricant and silica; intermediate layers such as the gas barrier resin layer, an oxygen absorbing layer, a grind layer, and an adhesive resin; and an outer surface layer of an olefin resin. Just one kind of olefin resin may be used for the multilayer structure as long as a predetermined amount of silica particles are blended in the olefin resin to form the inner surface layer. That is, there is no necessity of using olefin resins of different grades for forming the inner surface layer and the outer surface layer, but the inner surface layer and the outer surface layer can be formed of the same olefin resin. This may result in a great advantage from an industrial viewpoint. In addition, the inner and outer surfaces can exhibit easily the properties like flexibility imparted by the olefin resin.

Another remarkable advantage of the present invention is described in Examples below. That is, in a case where the inner surface layer formed of the olefin resin layer containing lubricant and silica and the lubricant-containing olefin resin layer (second inner layer) are placed adjacent to each other, it is possible to prevent efficiently the lubricant in the second inner layer from bleeding onto the inner surface.

For maximizing the advantage, the multilayer structured body of the present invention comprises an inner surface layer formed of the olefin resin containing lubricant and silica, a lubricant-containing olefin resin layer as a second inner layer adjacent to the inner surface layer, and a gas barrier resin layer as an intermediate layer in this order.

The gas barrier resin layer has an effect of shielding migration of the lubricant. As a result, the lubricant in the second inner layer cannot migrate into the gas barrier resin layer, and thus, it may migrate selectively into the inner surface layer. In this case, the total amount of the lubricant to migrate into the inner surface layer may be increased in comparison with a case where the gas barrier resin layer is not provided as the adjacent layer for the second inner layer, thereby allowing easy bleeding of the lubricant onto the substrate surface, and the lubricant may repel oily liquids. As mentioned above, however, when the olefin resin layer containing lubricant and silica as described here is used for the inner surface layer, bleeding of the lubricant onto the substrate surface can be prevented effectively. As a result, a homogeneous oil film can be formed on the substrate surface.

In a multilayered structure comprising the inner surface layer formed of the olefin resin containing lubricant and silica, a lubricant-containing olefin resin layer as a second inner layer adjacent to the inner surface layer, and a gas barrier resin layer as an intermediate layer placed in this order, an adhesive layer may be placed as required between the lubricant-containing olefin resin layer and the gas barrier resin layer, since the adhesive layer is usually so thin and it imposes very little influence on the migration of the lubricant. For the gas barrier resin layer, ethylene-vinyl alcohol copolymer (EVOH) or polyamide can be used alone or as a blend thereof. It is also possible to use a blend of either EVOH or polyamide with a polyolefin resin.

From the viewpoint of cost reduction, it is favorable to use the same lubricant-containing polyolefin resin for the second inner layer and the outer surface layer. Since the outer surface layer is usually required to have a low friction coefficient while being conveyed on a line, use of a lubricant-containing polyolefin resin is effective.

The single-layer or multilayer structured body can be formed in accordance with the embodiment by any shaping method known per se: a film shaping method such as a casting method, a T-die method, a calendaring method, and an inflation method; sandwich lamination; co-extrusion shaping; co-injection shaping; compression shaping; and vacuum shaping. For instance, for formation of a container, a preform shaped as a sheet, a pipe, a test tube or the like is shaped, and then, a secondary shaping such as a plug-assist shaping and a blow shaping is conducted, thereby providing a container shaped as a cup, a tray or a bottle.

In the present invention, the oil film 3 on the surface of the aforementioned substrate 1 is formed of an oily liquid to improve lubricity to a viscous hydrous substance.

The oily liquid is required to be a nonvolatile liquid having a smaller vapor pressure under the atmospheric pressure, for instance, a high-boiling point liquid having a boiling point of 200°C or higher, because a volatile liquid would volatilize easily and disappear over time, making it difficult to form the oil film 3.

Various specific examples of the oily liquid can be presented as long as the liquid has a high boiling point as mentioned above. In particular, when the oily liquid has a surface tension considerably different from that of a viscous hydrous substance, the oily liquid has a high lubrication effect and can be used suitably in the present invention, as such a liquid exhibits a preferable lubricity to the viscous hydrous substance.

For instance, it is preferable to use an oily liquid having a surface tension in a range of 10 to 40 mN/m, in particular in a range of 16 to 35 mN/m. Representative examples of the oily liquid include glycerin fatty acid ester, liquid paraffin, and edible oil/fat (edible oil). An edible oil/fat is particularly suitable when the viscous hydrous substance is food.

Examples of the edible oil/fat that can be preferably used include soy oil, rapeseed oil, olive oil, rice oil, corn oil, safflower oil, sesame oil, palm oil, castor oil, avocado oil, coconut oil, almond oil, walnut oil, hazelnut oil, and salad oil.

Usually, the aforementioned oil film 3 of the oily liquid in an amount of 1.0 to 50 g/m², in particular in an amount of 3.0 to 20 g/m² is formed on the surface of the substrate 1 (or on the inner surface of a substrate 1 as a package). In the present invention, the oil film 3 having this thickness is formed uniformly across the entire surface of the substrate 1. In other words, there is no area free of the oil film 3 on the surface of the substrate 1. As a result, the entire surface of the substrate 1 can exhibit even and excellent lubricity, thereby preventing problems such as adhesion of the viscous hydrous substance to a part of the surface.

When the amount or the thickness of the oil film 3 is greater than the aforementioned range, problems such as fall of the oil film 3 may occur easily. When the amount or the thickness of the oil film 3 is smaller than the range, the oil film 3 may not be formed homogeneously, or the oil film 3 may be formed discontinuously.

In the present invention, the oil film 3 may be formed by applying an oily liquid for forming the oil film 3 by spraying, immersing, roll-coating and the like, on the previously-shaped substrate 1. Formation of the oil film 3 by spraying is particularly preferred from the viewpoint of forming the oil film 3 irrespective of the shape of the substrate 1. In a case of shaping the substrate 1 by blowing, it is possible to form the oil film 3 by feeding the oily liquid together with the blow fluid.

In another known method, the oily liquid is mixed in advance with the olefin resin for forming the surface, thereby forming the oil film on the surface by bleeding that is conducted after the shaping. However, this method is not suitable for producing the structured body 1 of the present invention since silica particles to prevent bleeding is blended in the olefin resin for forming the surface.

In the present invention, an alternative method can be employed depending on the embodiment of the substrate 1. In the method, the oil film 3 is formed after roughening the surface of the substrate 1 on which the oil film 3 is to be formed, by subjecting the substrate 1 to a post-process known per se such as blasting, thereby further enhancing the retention of the oil film 3.

The aforementioned structured body of the present invention can exhibit sufficiently its surface properties imparted by the oil film 3, and improve the lubricity to viscous hydrous substances. Therefore, the structured body of the present invention is suitably used as a container to be filled with viscous hydrous substances such as ketchup, aqueous paste, honey, various kinds of sauces, mayonnaise, mustard, dressing, jam, chocolate syrup, yogurt, and cosmetics such as a milky lotion. The structured body is preferred in particular as a directly-blow shaped container.

In the present invention, the silica fine particles are blended in advance in the olefin resin to form the surface. After forming an oil film on the surface, the surface can exhibit excellent lubricity to a viscous hydrous substance irrespective of blending of the lubricant in the olefin resin in use. As a result, the present invention can provide a remarkable advantage that there is no necessity of selecting the compositions of the olefin resin in industrial production.

### Examples:

The present invention will be described by way of the following Experimental examples.

Various properties, methods of measuring physical properties in the Experimental examples are described below.

### 1. Measurement of contact angle of oil

The oil contact angle of the structured body surface (bottle inner surface) produced in the method mentioned below was measured by using a solid-liquid interface analysis system DropMaster 700 (manufactured by Kyowa Interface Science Co., Ltd.). Salad oil was used for the measurement. Specifically, the salad oil was dropped on the structured body surface in the air, and its oil contact angle (1 µL) after 60 seconds was measured. A value of 10 degrees or less indicates that the oil spreads well and a uniform oil film can be applied.

### 2. Spray applicability test

Salad oil was applied by spraying onto the surface of structured body (bottle inner surface) prepared in the method below in order to evaluate the spray applicability. The evaluation criteria are as follows.

Good: The salad oil is not repelled, and an oil film is formed.

Bad: The salad oil is repelled, the oil film is not formed at some parts.

### <Example 1>

A multilayer parison comprising six layers of four types was shaped by using four extruders. Then, this multilayer parison was used to obtain a multilayer bottle (internal volume: 400 ml) comprising six layers of four types as mentioned below by a known method of directly blow-shaping of this multilayer parison. The multilayer bottle have a thickness of 400 µm at the barrel and the layer composition ratio is as follows (unit: wt%) .

Outer surface layer (10.9) / Blend gas barrier layer (2.7) / Main layer (67.7) / Blend gas barrier layer (2.4) / Second inner layer (12.3) / Inner surface layer (4.0)

The materials used for the respective layers are as follows.

### Outer surface layer

### Low-density polyethylene (LDPE)

MFR: 0.3 g/10min (190°C, 2.16 Kg)
Density: 0.922 g/cm³
Lubricant (0.03 parts by mass of oleic acid amide per 100 parts by mass of LDPE)

### Blended gas barrier layer:

A blend of EVOH copolymer and olefin resin

### Main layer

### Low-density polyethylene (LDPE)

MFR: 0.3 g/10min (190°C, 2.16 Kg)
Density: 0.922 g/cm³
Lubricant (0.03 parts by mass of oleic acid amide per 100 parts by mass of LDPE)

### Second inner layer

### Low density polyethylene (LDPE)

MFR: 0.3 g/10min (190°C, 2.16 Kg)
Density: 0.922 g/cm³
Lubricant (0.03 parts by mass of oleic acid amide per 100 parts by mass of LDPE)

### Inner surface layer:

### A blend of low-density polyethylene (LDPE) and silica

LDPE: silica = 99:1 (weight ratio)
MFR of LDPE: 0.3 g/10min (190°C, 2.16 Kg)
Density of LDPE: 0.922 g/cm³
Lubricant (0.03 parts by mass of oleic acid amide per 100 parts by mass of LDPE)

The produced structured body (multilayer bottle) was used to conduct the aforementioned measurement of contact angle of oil and a test for spray applicability. The results are shown in Table 1.

### <Examples 2 to 4>

A multilayer bottle was shaped in a manner similar to that of Example 1 except that the resin composition used for the inner surface layer was replaced by a resin composition as described below, and the layer composition ratio was changed as described below, and then, the bottle was subjected to a measurement of the oil contact angle and a test for spray applicability. The results are shown in Table 1.

### Inner surface layer

### Blend of low-density polyethylene (LDPE)

LDPE:silica = 97:3 (weight ratio)
MFR of LDPE: 0.3 g/10min (190°C, 2.16 Kg)
Density of LDPE: 0.922 g/cm³
Lubricant (0.03 parts by mass of oleic acid amide per 100 parts by mass of LDPE)

### Layer composition ratio in Example 2

Outer surface layer (10.8) / Blend gas barrier layer (2.9) / Intermediate layer (68.7) / Blend gas barrier layer (2.6) / Second inner layer (11.9)/ Inner surface layer (3.1)

### Layer composition ratio in Example 3

Outer surface layer (11.2) / Blend gas barrier layer (2.6) / Intermediate layer (67.2) / Blend gas barrier layer (2.2) / Second inner layer (12.3) / Inner surface layer (4.5)

### Layer composition ratio in Example 4

Outer surface layer (10.8) / Blend gas barrier layer (3.0) / Intermediate layer (65.6) / Blend gas barrier layer (2.5) / Second inner layer (12.6)/Inner surface layer (5.5)

### <Examples 5 to 8>

A multilayer bottle was shaped in a manner similar to that of Example 1 except that the resin composition used for the inner surface layer was replaced by a resin composition as described below and the layer composition ratio was changed as described below, and then, the bottle was subjected to a measurement of the oil contact angle and a test for spray applicability. The results are shown in Table 1.

### Inner surface layer

### Blend of low-density polyethylene (LDPE) silica

LDPE:silica = 95:5 (weight ratio)
MFR of LDPE: 0.3 g/10min (190°C, 2.16 Kg)
Density of LDPE: 0.922 g/cm³
Lubricant (0.03 parts by mass of oleic acid amide per 100 parts by mass of LDPE)

### Layer composition ratio in Example 5

Outer surface layer (11.0) / Blend gas barrier layer (2.8) / Intermediate layer (68.6) / Blend gas barrier layer (2.5) / Second inner layer (11.8) / Inner surface layer (3.3)

### Layer composition ratio in Example 6

Outer surface layer (11.0) / Blend gas barrier layer (2.8) / Intermediate layer (67.2) / Blend gas barrier layer (2.6) / Second inner layer (12.2) / Inner surface layer (4.2)

### Layer composition ratio in Example 7

Outer surface layer (9.0) / Blend gas barrier layer (1.7) / Intermediate layer (59.0) / Blend gas barrier layer (2.1) / Second inner layer (23.4) / Inner surface layer (4.8)

### Layer composition ratio in Example 8

Outer surface layer (15.9) / Blend gas barrier layer (4.4) / Intermediate layer (53.4) / Blend gas barrier layer (3.7) / Second inner layer (17.9) / Inner surface layer (4.7)

### <Example 9>

A multilayer bottle was shaped in a manner similar to that of Example 1 except that the resin composition used for the inner surface layer was replaced by a resin composition as described below, and then, the bottle was subjected to a measurement of the oil contact angle and a test for spray applicability. The results are shown in Table 1.

### Inner surface layer

### Blend of low-density polyethylene (LDPE) silica

LDPE:silica = 99.7:0.5 (weight ratio)
MFR of LDPE: 0.3 g/10min (190°C, 2.16 Kg)
Density of LDPE: 0.922 g/cm³
Lubricant (0.03 parts by mass of oleic acid amide per 100 parts by mass of LDPE)

### <Comparative Example 1>

A multilayer bottle was shaped in a manner similar to that of Example 1 except that the resin composition used for the inner surface layer was replaced by a resin composition as described below and the layer composition ratio was changed as described below, and then, the bottle was subjected to a measurement of the oil contact angle and a test for spray applicability. The results are shown in Table 1.

### Inner surface layer

### Low-density polyethylene (LDPE)

MFR of LDPE: 0.3 g/10min (190°C, 2.16 Kg)
Density of LDPE: 0.922 g/cm³
Lubricant (0.03 parts by mass of oleic acid amide per 100 parts by mass of LDPE)

### Layer composition ratio in Comparative Example 1

Outer surface layer (16.1) / Blend gas barrier layer (4.0) / Intermediate layer (54.4) / Blend gas barrier layer (3.3) / Second inner layer (17.2) / Inner surface layer (5.0)

| | Inner surface layer | | | | Second inner layer | | Second inner layer / inner surface layer | Oil contact angle [°] | Spray applicability |
|---|---|---|---|---|---|---|---|---|---|
| | Resin | Silica | Lubricant | Composition | Resin | Composition | | | |
| | | [part by mass] *¹ | [part by mass] *² | ratio [wt%] | | ratio [wt%] | | | |
| Ex. 1 | LDPE | 1.0 (3,367) | 0.03 | 4 | LDPE | 12.3 | 3.1 | 5 | Good |
| Ex. 2 | ↑ | 3.1 (10,309) | ↑ | 3.1 | ↑ | 11.9 | 3.8 | 4 | Good |
| Ex. 3 | ↑ | ↑ | ↑ | 4.5 | ↑ | 12.3 | 2.7 | 4 | Good |
| Ex. 4 | ↑ | ↑ | ↑ | 5.5 | ↑ | 12.6 | 2.3 | 5 | Good |
| Ex. 5 | ↑ | 5.3 (17,544) | ↑ | 3.3 | ↑ | 11.8 | 3.6 | 5 | Good |
| Ex. 6 | ↑ | ↑ | ↑ | 4.2 | ↑ | 12.2 | 2.9 | 4 | Good |
| Ex. 7 | ↑ | ↑ | ↑ | 4.8 | ↑ | 23.4 | 4.9 | 4 | Good |
| Ex. 8 | ↑ | ↑ | ↑ | 4.7 | ↑ | 17.9 | 3.8 | 4 | Good |
| Ex. 9 | ↑ | 0.5 (1,675) | ↑ | 4.0 | ↑ | 12.3 | 3.1 | 8 | Good |
| Comp. Ex. 1 | LDPE | - | - | 5 | LDPE | 17.2 | 3.4 | 20 | Bad |

| | | | | | | | | | |
|---|---|---|---|---|---|---|---|---|---|
| *1: blend amount per 100 parts by mass of olefin resin, numeric value in parentheses indicates blend amount per 100 parts by mass of lubricant *2: blend amount per 100 parts by mass of olefin resin | | | | | | | | | |

[Table 1]

In Examples 1-9, the inner surface layer is formed of LDPE containing silica particles and a lubricant comprising aliphatic amide, while in Comparative Example 1, the inner surface layer contains no silica particles. Table 1 shows that in Examples 1-9, the oil contact angle is not more than 5 degrees, and the spray applicability is excellent, indicating that the lubricant is prevented effectively from bleeding onto the substrate surface. In contrast, the oil contact angle in Comparative Example 1 is 20 degrees, namely, the spray applicability is bad.

It is further confirmed that in the structured body of the present invention, bleeding of the lubricant of aliphatic amide from the second inner layer can be prevented even when the thickness ratio of the second inner layer to the inner surface layer is set to a range of 2 to 6.

### Explanations of Letters or Numerals:

1: substrate
3: oil film

## Claims

1. A structured body including a substrate having a surface formed of an olefin resin containing lubricant and silica, and an oil film formed on the surface, wherein the olefin resin containing lubricant and silica includes silica particles dispersed as an additive for preventing the lubricant from bleeding.

2. The structured body according to claim 1, wherein the substrate has a multilayer structure, and the multilayer structure includes an olefin resin layer containing lubricant and silica, a lubricant-containing olefin resin layer and a gas barrier resin layer in this order when viewed from the surface on which the oil film is formed.

3. The structured body according to claim 2, wherein a ratio in thickness of the lubricant-containing olefin resin layer has a thickness 2 to 6 times the thickness of the olefin resin layer containing lubricant and silica.

4. The structured body according to claim 1, wherein the lubricant is contained in an amount of 0.02 to 5 parts by mass per 100 parts by mass of an olefin resin in the olefin resin layer containing lubricant and silica.

5. The structured body according to claim 1, wherein the oil film is formed of any material selected from glycerol fatty acid ester, liquid paraffin, and edible oil/fat.

6. The structured body according to claim 1, wherein the substrate is a container to contain a hydrous substance.

7. The structured body according to claim 6, including the oil film, the olefin resin layer containing lubricant and silica and serving as an inner surface layer, the lubricant-containing olefin resin layer, the gas barrier resin layer and an outer surface layer in this order when viewed from the interior of the container, and the outer surface layer and the olefin resin layer containing lubricant and silica are formed of an identical olefin resin.

8. The structured body according to claim 1, wherein the lubricant includes unsaturated fatty acid amide.

9. The structured body according to claim 8, wherein the silica particles are hydrophilic silica particles dispersed in the amount of not more than 5% by mass in the olefin resin layer containing lubricant and silica.

10. The structured body according to claim 1, wherein the silica particles have a mean primary particle size in a range of 1 to 50 µm.
